# EUROPEAN PATENT APPLICATION

(11) **EP 4 252 520 A1**
(43) Date of publication of application: **04.10.2023**
(21) Application number: 23162526.0
(22) Date of filing: 17.03.2023
(51) Int. Cl.: A01D 69/02, B60K 1/00, B60K 1/04

(54) **ELECTRIC WORK VEHICLE**

(30) Priority: 31.03.2022 JP 2022058489; 21.02.2023 JP 2023025024
(71) Applicant: Kanzaki Kokyukoki Mfg. Co., Ltd., Amagasaki Hyogo (JP)
(72) Inventor: OGURA, Kohei, c/o Kanzaki Kokyukoki Mfg. Co., Ltd. (JP); KONOTO, Masaaki, c/o Kanzaki Kokyukoki Mfg. Co., Ltd. (JP)
(74) Representative: Wunderlich & Heim Patentanwälte Partnerschaftsgesellschaft mbB

(57) **Abstract**

An electric work vehicle includes: at least one motor configured to drive one or both of a travelling device and a working device included in a vehicle; an operation section (32) configured to direct a rotational speed or actuation of the motor; a control section (100) configured to control the motor according to an operation of the operation section (32); and a battery (82) configured to supply power to the motor. The control section (100) decreases an upper limit of rotational speed of the motor, based on a detected result with regard to a battery condition including a voltage of the battery.

## Description

### BACKGROUND

### Technical Field

The present disclosure relates to an electric work vehicle equipped with a travelling device and a working device.

### Related Art

Conventionally, work vehicles equipped with a working device are known. For example, a lawn mowing vehicle equipped with a lawn mower as a working device which is driven to perform lawn mowing work is conventionally known. Further, such work vehicles can also be electric work vehicles equipped with a travel motor, which is an electric motor that drives a travelling device such as wheels, and a work motor, which is an electric motor that drives a working device.

For example, in Japanese Patent No. 6121213, there is described an electric work vehicle in which left and right travel motors, which are electric motors, drive wheels on the corresponding sides and a blade motor (work motor) drives a rotary blade of a lawn mowing unit (working device).

Furthermore, in the vehicle described in Patent No. 6121213, a temperature sensor detects the temperature of the blade motor, and, in a case where the temperature detected by the temperature sensor is higher than a threshold, an exception speed control section drives the travel motor so that the vehicle travels at an exception speed which is slower than the target travel speed that is determined by left and right control levers. Accordingly, protection of the blade motor is expected to be achieved.

Incidentally, regarding electric work vehicles equipped with at least one motor that drives one or both of a travelling device and working device, a high load on a battery that supplies power to the motor may cause a decrease in life of the battery. Further, if the upper limit of the power supplied to the motor is always kept sufficiently low to protect the battery, work efficiency may decrease. Accordingly, it is desirable to achieve both protection of the battery and improvement of work efficiency.

Further, in a case of controlling traveling of a vehicle equipped with a travel motor that drives a travelling device and a work motor that drives a working device, the discharge current from the battery may rise excessively if the traveling is controlled according to torque generated by each motor. If the discharge current of the battery exceeds the allowable upper limit value, a process of cutting off the current flowing from the battery to each motor, etc., is performed in order to protect the battery. The vehicle therefor stops abruptly, and thus the efficiency of work with the working device greatly decreases.

### SUMMARY

The purpose of the present disclosure is to achieve both protection of a battery and improvement of work efficiency in an electric work vehicle.

A first electric work vehicle according to the present disclosure includes: at least one motor configured to drive one or both of a travelling device and a working device included in the vehicle; an operation section configured to direct a rotational speed or actuation of the motor; a control section configured to control the motor according to an operation of the operation section; and a battery configured to supply power to the motor, wherein the control section decreases an upper limit of rotational speed of the motor, based on a detected result with regard to a battery condition including a voltage of the battery.

A second electric work vehicle according to the present disclosure includes: at least one motor configured to drive one or both of a travelling device and a working device included in the vehicle; an operation section configured to direct torque or actuation of the motor; a control section configured to control the motor according to an operation of the operation section; and a battery configured to supply power to the motor, wherein the control section decreases an upper limit of torque of the motor, based on a detected result with regard to a battery condition including a voltage of the battery.

A third electric work vehicle according to the present disclosure includes: a travel motor configured to drive at least one travelling device; a work motor configured to drive at least one working device; a battery configured to supply power to the travel motor and the work motor, the battery having a specified maximum discharge current; and a control section configured to control the travel motor and the work motor, wherein the control section controls a rotational speed of the travel motor so that a discharge current of the battery does not exceed the maximum discharge current during driving of the work motor.

### BRIEF DESCRIPTION OF THE DRAWINGS

FIG. 1 is a perspective view of an electric work vehicle of an embodiment according to the present disclosure;
FIG. 2 is a schematic configuration diagram of the vehicle of FIG. 1;
FIG. 3 is a block diagram illustrating a control system of the vehicle of FIG. 1;
FIG. 4 is a diagram illustrating an example of a time course of battery voltage and upper limit value of a rotational frequency of travel motors in the embodiment;
FIG. 5 is a diagram illustrating an example of the time course of battery voltage and upper limit value of a rotational frequency of the travel motors in another example of the embodiment;
FIG. 6A is a diagram illustrating an example of a time course of battery voltage, remaining charge amount (SOC) of the battery, and upper limit value of a rotational frequency of travel motors in another example of the embodiment;
FIG. 6B is a diagram in which an example of the case of decreasing the upper rotational frequency limit of the travel motors in the embodiment is illustrated with a relationship between the rotational frequency of the travel motors and a control position of an operation section;
FIG. 6C is a diagram in which another example of the case of decreasing the upper rotational frequency limit of the travel motors in the embodiment is illustrated with a relationship between the rotational frequency of the travel motors and the control position of the operation section;
FIG. 6D is a diagram corresponding to FIG. 4 in another example of the embodiment;
FIG. 7 is a block diagram illustrating the control system of the vehicle in another example of the embodiment;
FIG. 8 is a diagram illustrating discharge current from the battery to deck motors and discharge current to the travel motors as well as a time course of rotational frequencies of the deck motors and the travel motors in another example of the embodiment;
FIG. 9 is a diagram illustrating an overview of a circuit configuration to provide power from the battery to the travel motors (or deck motors) in another example of the embodiment;
FIG. 10 is a diagram illustrating an overview of a circuit configuration to provide power from the battery to the travel motors (or deck motors) in another example of the embodiment;
FIG. 11 is a diagram illustrating an overview of a circuit configuration to provide power from the battery to the travel motors (or deck motors) in another example of the embodiment; and
FIG. 12 is a diagram illustrating an overview of a circuit configuration to provide power from the battery to the travel motors (or deck motors) in another example of the embodiment.

### DESCRIPTION OF EXEMPLARY EMBODIMENTS

Hereinafter, a detailed explanation is given of an embodiment of the present disclosure with reference to the drawings. Although the following description explains the case in which the electric work vehicle is a lawn mowing vehicle, the electric work vehicle is not limited to a lawn mowing vehicle and may be any other work vehicle equipped with a working device that performs one or more of snow removal work, excavation work, civil engineering work, and agricultural work. Further, although the following description explains the case of using left and right lever-type operators equipped with left and right operation levers, this is merely an example, and it is also possible that a steering wheel is used as a steering controller and that an accelerator pedal installed in the front of a seat is used as an acceleration controller. Although the following description explains the electric work vehicle as being equipped with wheels as a travelling device driven by a travel motor and as traveling by driving of the wheels, it is also possible that the travelling device is a crawler or the like. The shapes, number of parts, arrangement relationships of components, etc., explained in the following description are examples for explanation and thus may be changed as necessary to meet the specifications of electric work vehicles. In the following, similar elements are assigned with the same reference numerals in all of the drawings, so that redundant explanations are omitted or simplified.

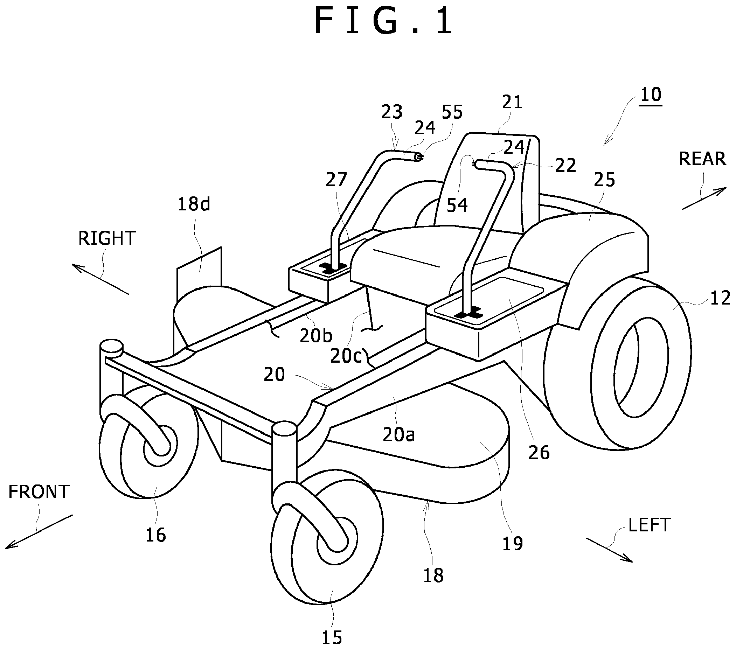

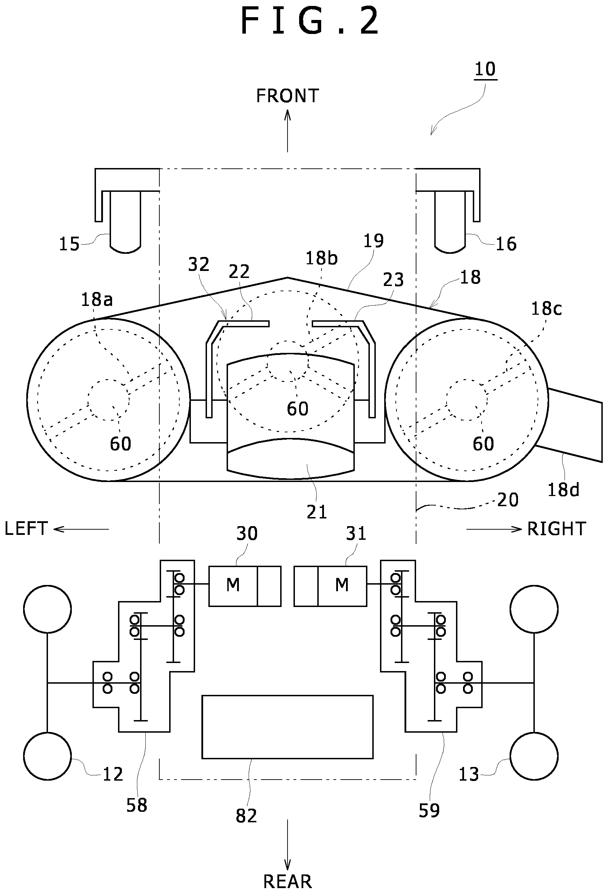

By reference to FIG. 1 to FIG. 4, an electric work vehicle 10 of an embodiment is explained. Hereinafter, the electric work vehicle 10 is referred to as the vehicle 10. FIG. 1 is a perspective view of the vehicle 10. FIG. 2 is a schematic configuration diagram of the vehicle 10. Note that, although in the configuration of FIG. 1 to FIG. 4 left and right wheels 12 and 13 are arranged on the rear side and caster wheels 15 and 16 are arranged on the front side, it is also possible that the wheels are on the front side and the caster wheels are on the rear side.

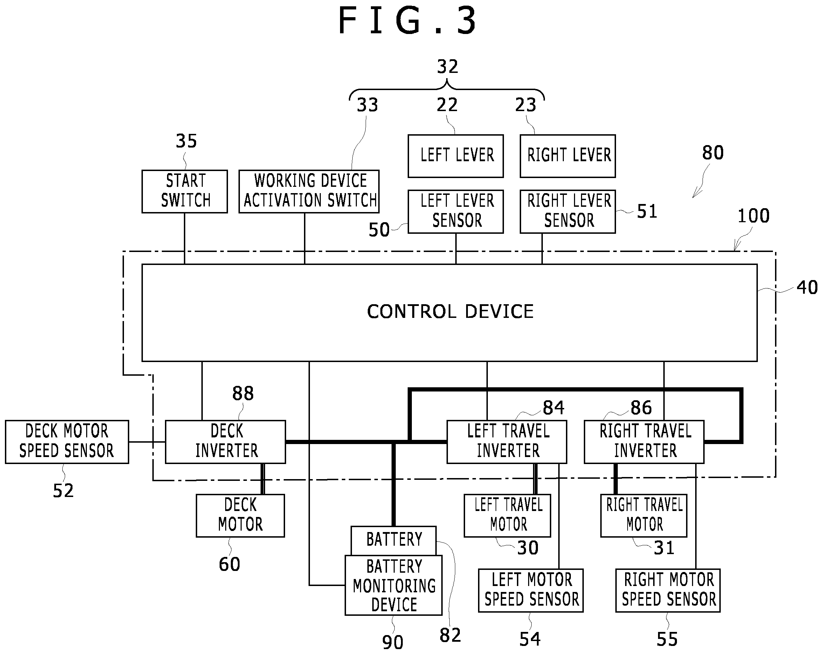

The vehicle 10 is a self-propelled lawn mowing vehicle suitable for lawn mowing. The vehicle 10 is equipped with the left wheel 12 and the right wheel 13 which are the left and right wheels (FIG. 2), the caster wheels 15 and 16, a lawnmower 18 which is a working device, a left travel motor 30 and a right travel motor 31 (FIG. 2), three deck motors 60 which are work motors (FIG. 2), and left and right operation levers 22 and 23 and a working device activation switch 33 which configure an operation section 32 (FIG. 3). The vehicle 10 is further equipped with left and right travel inverters 84 and 86, three deck inverters 88, and a control device 40, which configure a control section 100 (FIG. 3), as well as a battery 82 (FIG. 2) and a battery monitoring device 90 (FIG. 3). The left travel motor 30, the right travel motor 31, and the deck motors 60 are electric motors, respectively. The deck inverters 88 correspond to work inverters.

The left wheel 12 and the right wheel 13 are rear wheels supported on both left and right sides of the rear side of a main frame 20, which is a vehicle body, and are the main drive wheels. The main frame 20 is formed of metal such as steel, so as to have a beam structure or the like. The main frame 20 includes side plate sections 20a and 20b, which extend approximately in the front-rear direction at both left and right ends, and the coupling section 20c, which couples the side plate sections 20a and 20b on the left and right sides. Between the rear end sections of the left and right side plate sections 20a and 20b, a driver's seat 21 on which the driver sits is fixed.

In the main frame 20, two guide panels 26 and 27 are fixed on left and right sides of the driver's seat 21, and the left and right operation levers 22 and 23 are supported on the main frame 20 so as to protrude upward from the two guide panels 26 and 27, respectively. The left operation lever 22 corresponds to an acceleration controller that directs acceleration of the left travel motor 30, and the right operation lever 23 corresponds to an acceleration controller that controls acceleration of the right travel motor 31. The tip sections of the respective operation levers 22 and 23 are grasped by the driver to control the rotational directions and rotational speeds of the left wheel 12 and the right wheel 13. The left operation lever 22 is operated to direct driving and acceleration of the left wheel 12 by changing the direction of the rotational speed of the left wheel 12 to a higher rotational speed. The right operation lever 23 is operated to direct driving and acceleration of the right wheel 13 by changing the direction of the rotational speed of the right wheel 13 to a higher rotational speed. Each of the operation levers 22 and 23 is in an approximate L-shape and has a grip section 24 extending in the left-right direction at the upper end section thereof. The grip section 24 is grasped and operated by the driver. Each of the operation levers 22 and 23 is pivotable about an axis along the left-right direction at the lower end section. Regarding each of the operation levers 22 and 23, in a case of being tilted toward the front side with respect to the N-position, which is the neutral position in the vicinity of the upright position, the motor 30 (or 31) on the same side as the operation lever 22 (or 23) is controlled to be driven at a target rotational frequency per unit time (sec⁻¹) that is a target rotational speed corresponding to forward traveling. The target rotational speed may be set as a target rotational frequency per minute (min⁻¹). The operation levers 22 and 23 direct the target rotational frequencies to be higher as the amounts of tilt become larger. In a case where the operation lever 22 or 23 is tilted toward the rear side with respect to the N-position, the motor 30 (or 31) on the same side as the operation lever 22 (or 23) is controlled to be driven at a target rotational frequency corresponding to backward traveling, and the target rotational frequency is controlled to be higher as the amount of tilt becomes larger. Accordingly, the respective operation levers 22 and 23 direct the target rotational frequencies of the corresponding travel motors 30 and 31.

The pivoting positions of the left and right two operation levers 22 and 23 in the front-rear direction are detected by a left lever sensor 50 and a right lever sensor 51 (FIG. 3), which are lever position sensors, respectively. Each of the lever sensors 50 and 51 includes, for example, a potentiometer. Detection signals of each of the lever sensors 50 and 51 are sent to the control device 40.

The left and right two caster wheels 15 and 16 are steered wheels supported on the front end section of the main frame 20 and are the front wheels. Each of the caster wheels 15 and 16 is installed so as to be apart from the left wheel 12 and the right wheel 13 in the front-rear direction of the vehicle 10. Each of the caster wheels 15 and 16 is capable of free rotation of 360 degrees or more about a vertical axis (up-down direction in FIG. 1). Note that the caster wheels are not limited to such a configuration in which two caster wheels are arranged on a vehicle, and it is also possible that only one or three or more caster wheels are arranged on a vehicle.

As illustrated in FIG. 2, the left travel motor 30 is connected to the left wheel 12 via a left side reduction gear device 58 which is supported on the rear side of the main frame 20. The right travel motor 31 is connected to the right wheel 13 via a right side reduction gear device 59 which is supported on the rear side of the main frame 20. The left travel motor 30 and the right travel motor 31 are respectively supported on the left side and right side of the rear side of the main frame 20.

The battery 82 (FIG. 3) is connected to the left travel motor 30 via the left travel inverter 84 (FIG. 3), so that power is supplied from the battery 82 to the left travel motor 30. The battery 82 is connected to the right travel motor 31 via the right travel inverter 86 (FIG. 3), so that power is supplied from the battery 82 to the right travel motor 31. The left travel motor 30 and the right travel motor 31 are three-phase motors, for example. As illustrated in FIG. 2, the battery 82 is fixed to the upper face side or lower face side of the main frame 20 behind the driver's seat 21.

As illustrated in FIG. 1 and FIG. 2, the lawnmower 18 is supported on the lower side of the longitudinal midsection of the main frame 20. Accordingly, the lawnmower 18 is arranged between the caster wheels 15 and 16 and the left and right wheels 12 and 13 with respect to the front-rear direction. The lawnmower 18 includes three lawn mowing blades 18a, 18b, and 18c (FIG. 2) as lawn mowing rotary tools arranged inside the mower deck 19, which serves as a cover. The upper sides of the lawn mowing blades 18a, 18b, and 18c are covered with a mower deck 19. Each of the lawn mowing blades 18a, 18b, and 18c has multiple blade elements that rotate around an axis oriented in the vertical direction (the paper front-back direction of FIG. 2). Accordingly, rotating blade elements are able to cut and mow a lawn. Each of the three lawn mowing blades 18a, 18b, and 18c is connected to the corresponding deck motor 60 of the three deck motors 60, which are work motors. Each deck motor 60 is connected to the battery 82 via the deck inverter 88 (FIG. 3), which is an inverter for the corresponding deck motor 60, so that power is supplied from the battery 82 to each deck motor 60. Each deck motor 60 is a three-phase motor, for example.

The lawnmower may be configured with a lawn mowing reel as a rotary tool for lawn mowing, which has a function of mowing a lawn or the like with a helical blade, for example, arranged on a rotary axis parallel to the ground surface and is driven by a deck motor.

FIG. 3 is a block diagram illustrating a control system 80 of the vehicle 10. The control device 40 is connected to a start switch 35, a working device activation switch 33, the left and right lever sensors 50 and 51, the left and right travel inverters 84 and 86, the deck inverters 88, and left and right motor speed sensors 54 and 55. The start switch 35 and the working device activation switch are installed on or near one of guide panels 26 and 27, each of which guides one of the left and right two operation levers 22 and 23. The start switch 35 is installed so as to be operable by the user and, based on the operation, power is supplied from the battery 82 to the control device 40 to activate the control device 40. The working device activation switch 33 is installed so as to be operable by the user and, based on the operation, actuation and stopping of the lawnmower 18 are switched. If the activation of the lawnmower 18 is directed, or turned on, by the working device activation switch 33, the control device 40 controls the later-described deck inverters 88 to be actuated so as to keep the deck motors 60 rotating at a predetermined target rotational frequency.

Accordingly, the operation section 32 directs the target rotational frequencies of the left and right travel motors 30 and 31 and directs the actuation of the three deck motors 60. Alternatively, it is also possible that the vehicle is configured with only one travel motor instead of the left and right travel motors 30 and 31 and only one work motor instead of the three deck motors 60 so that the operation section directs the target rotational frequency of the one travel motor and directs the actuation of the one work motor.

The control system 80 includes the start switch 35, the operation section 32 including the working device activation switch 33 and the left and right operation levers 22 and 23, the left and right two lever sensors 50 and 51, the left and right travel motors 30 and 31 and travel inverters 84 and 86, the left and right motor speed sensors 54 and 55, the three deck motors 60 and deck inverters 88, the three deck motor speed sensors 52, and the control device 40. Although only one each of the deck motors 60, deck inverters 88, and deck motor speed sensors 52 is illustrated in FIG. 3, in reality, the three deck motors 60 are installed as illustrated in FIG. 2, and thus the three deck inverters 88 and three deck motor speed sensors 52 are installed in the control system 80 accordingly.

The left travel inverter 84 drives the left travel motor 30, and the right travel inverter 86 drives the right travel motor 31. Each of the travel inverter 84 and 86 is equipped with, for example, a travel inverter circuit, which includes three arms, each of which has two switching elements electrically connected in series, and a travel inverter control device, which controls the travel inverter circuit.

The actuation of each of the travel inverters 84 and 86 is controlled by the control device 40. Accordingly, the left travel motor 30 is controlled by the control device 40 via the left travel inverter 84. The right travel motor 31 is controlled by the control device 40 via the right travel inverter 86. Therefore, the rotational direction and rotational frequency of the left travel motor 30 and the right travel motor 31 are independently controlled by the control device 40. Therefore, the left travel motor 30 and the right travel motor 31 independently drive the left wheel 12 and the right wheel 13 with respect to the rotational directions and rotational frequencies.

Furthermore, detected values of the rotational frequency n (sec⁻¹) of the left travel motor 30 are input from the left motor speed sensor 54 to the left travel inverter control device of the left travel inverter 84. Detected values of the rotational frequency n (sec⁻¹) of the right travel motor 31 are input from the right motor speed sensor 55 to the right travel inverter control device of the right travel inverter 86. The left and right motor speed sensors 54 and 55 detect the rotational frequencies of the left and right travel motors 30 and 31, respectively. Detected values of the rotational frequency of each of the motor speed sensors 54 and 55 are output to the control device 40.

Each of the deck inverters 88 drives the corresponding deck motor 60. As with the travel inverter circuit and travel inverter control device of each of the travel inverters 84 and 86, each of the deck inverters 88 also has a deck inverter circuit, and a deck inverter control device that controls the deck inverter circuit.

The actuation of each of the deck inverters 88 is controlled by the control device 40. Accordingly, the respective deck motor 60 is controlled by the control device 40 via the deck inverter 88. Thus, each of the lawn mowing blades 18a, 18b, and 18c is driven to rotate by the corresponding deck motor 60. Each of the deck motors 60 is basically driven to maintain a predetermined target rotational frequency. The grass mowed by the lawnmower 18 is discharged to one side of the vehicle 10 through a discharge duct 18d installed on one side of the mower deck 19 in the left-right direction.

Furthermore, to the deck inverter control device of each of the deck inverters 88, detected values of the rotational frequency n (sec⁻¹) of the deck motor 60 are input from the respective deck motor speed sensor 52. Each of the deck motor speed sensors 52 detects the rotational frequency of the corresponding deck motor 60. Detected values of rotational frequencies of the deck motor speed sensors 52 are output to the control device 40 via the corresponding deck inverters 88. Note that, in FIG. 3, the power supply paths from the battery 82 are illustrated with thick solid lines. Further, in FIG. 3, the signal transmission paths are illustrated with thin solid lines.

The control device 40 includes an arithmetic section, such as a CPU, and a storage section, such as a memory, and is configured of a microcomputer, for example. The control device 40 obtains the operating positions of the two operation levers 22 and 23 based on the detection signals of the left and right lever sensors 50 and 51, so as to set the respective target rotational frequencies of the left travel motor 30 and right travel motor 31 according to the operating positions of the respective operation levers 22 and 23.

The control device 40 can perform execution of both straight traveling and turn traveling by setting target rotational frequencies of the left and right travel motors 30 and 31 according to the operating positions of the left and right operation levers 22 and 23. Furthermore, the vehicle 10 of the present example is configured with the battery monitoring device 90 that monitors the battery condition, which at least includes battery voltage in the battery 82. Therefore, the battery monitoring device 90 detects battery voltage with a voltage sensor. Detected values of battery voltage are output to the control device 40. The control device 40 decreases the upper limit of the target rotational frequencies of at least one of the travel motors 30 and 31 and the deck motors 60 to a first rotational frequency limit, which is a preset first rotational speed limit, based on detection results of the battery condition including a detected value of a battery voltage Vb from the battery monitoring device 90. Here, for example, the control device 40 gradually, e.g., linearly, decreases the upper limit of the target rotational frequencies of the travel motors 30 and 31 in a predetermined time period, which is set in advance, by a first predetermined amount or first predetermined rate, which is set in advance. It is also possible that the control device 40 gradually, e.g., linearly, decreases the upper limit of the target rotational frequencies of the deck motors 60 in a predetermined time period, which is set in advance, by a second predetermined amount or second predetermined rate, which is set in advance.

According to the configuration in the present example, the load on the battery 82 can be reduced according to the condition of the battery 82. Specifically, the change amount in voltage of the battery 82 is different according to the current output from the battery 82. In a case where the change amount in voltage of the battery 82 is large, it means that the current output from the battery 82 is large, and thus the load on the battery 82 is large. Therefore, it is desired to reduce the load on the battery 82 in order to protect the battery 82. To solve this problem, the configuration of the present example decreases the upper limit of the target rotational frequencies of at least one of the travel motors 30 and 31 and the deck motors 60 in a case where the change amount in detected values of battery voltage is large. Thereby, the actual rotational frequencies are decreased, so that the load on the battery 82 can be reduced. Further, it is not necessary that the upper limit of power supplied to at least one of the travel motors 30 and 31 and the deck motors 60 is always kept sufficiently low to protect the battery 82. Accordingly, both protection of the battery 82 and improvement of work efficiency can be achieved.

Furthermore, in a case where the change amount in voltage of the battery 82 is large and the current output from the battery 82 is large, it is expected that the lawnmower 18, which is a working device, is under a large load. In this case, the deck motors 60 are overloaded, and thus protection of the deck motors 60 is desired. In the configuration of the present example, if the upper limit of the target rotational frequencies of the deck motors 60 is decreased in a case where the change amount in detected values of battery voltage is large, it is possible to reduce the load on the battery 82 and protect the deck motors 60.

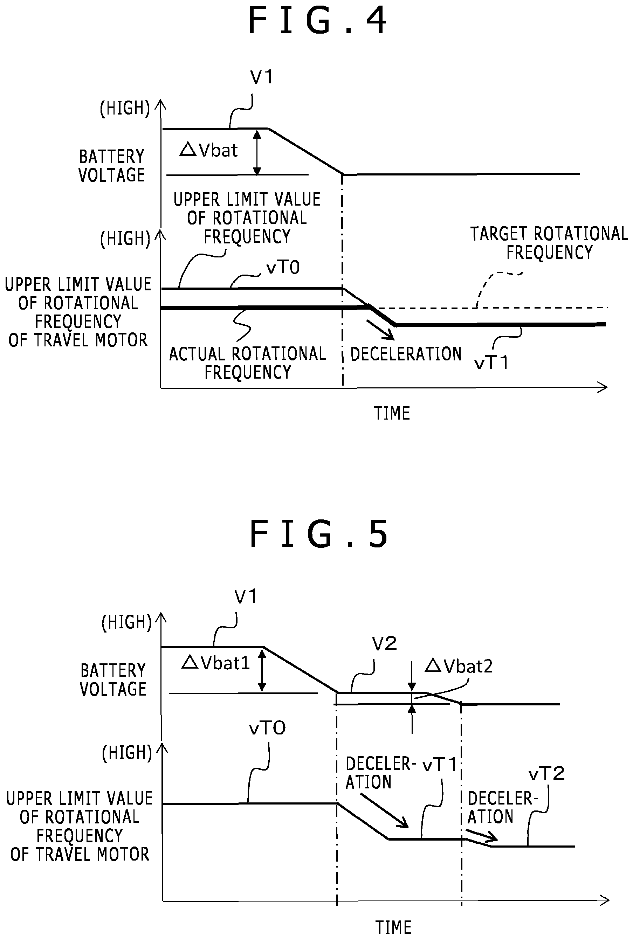

Although the case in which the upper limit value of the target rotational frequencies of the travel motors 30 and 31 is decreased in a case where the change amount in voltage of the battery 82 is large is hereinafter explained with reference to FIG. 4, the operation is similar to the case in which the upper limit value of the target rotational frequencies of the deck motors 60 is decreased instead of the travel motors 30 and 31.

In FIG. 4, an example of the time course of voltage of the battery 82 and the upper limit value of rotational frequency of the travel motors 30 and 31 in the embodiment is illustrated. In the example illustrated in FIG. 4, in a case where the battery voltage Vb decreases with the change amount in the battery voltage Vb from a reference voltage V1 being a first threshold ΔVbat or larger, the control section 100 decreases the upper limit of the target rotational frequency of each of the travel motors 30 and 31 from a reference rotational frequency vT0 to a set first rotational frequency limit vT1. Accordingly, both protection of the battery 82 and improvement of work efficiency can be achieved. In FIG. 4, an example of the change in actual rotational frequency is illustrated with a thick solid line in a lower portion of the drawing. In a case where the upper limit value of the rotational frequency, which is the upper limit of the target rotational frequency, decreases from vT0 to the first rotational frequency limit vT1 as illustrated in FIG. 4, the actual rotational frequency also decreases to vT1 if the first rotational frequency limit vT1 is lower than the target rotational frequency after the decrease in the upper limit value of the rotational frequency. Accordingly, since the load on the battery 82 can be reduced by the decrease in actual rotational frequency, both protection of the battery 82 and improvement of work efficiency can be achieved.

In FIG. 5, the time course of voltage of the battery 82 and upper limit value of the rotational frequency of the travel motors 30 and 31 in another example of the embodiment is illustrated. In the example illustrated in FIG. 5, each time a change of battery voltage occurs, the control section 100 adjusts the upper limit of the target rotational frequency of each of the travel motors 30 and 31 according to the magnitude of the change amount from the reference voltage V1 or V2. Specifically, in a case where the battery voltage Vb decreases to the voltage V2 with the magnitude of change amount in the battery voltage Vb from the reference voltage V1 being the first threshold ΔVbat1 or larger, the control section 100 decreases the upper limit of the target rotational frequency of each of the travel motors 30 and 31 from the reference rotational frequency vT0 to the set first rotational frequency limit vT 1, as in the configuration of FIG. 1 to FIG. 4.

Furthermore, in a case where the battery voltage Vb decreases further from the voltage V2, the control section 100 sets the voltage V2 as the reference voltage and decreases the upper limit of the target rotational frequency of each of the travel motors 30 and 31 to a set second rotational frequency limit vT2 according to the magnitude of the change amount from the voltage V2. For example, the voltage change amount ΔVbat1 is compared with a voltage change amount ΔVbat2, and, in a case where ΔVbat2 is smaller than ΔVbat1, the amount of decrease of the second rotational frequency limit vT2 from the first rotational frequency limit vT1 is made smaller than the amount of decrease of the first rotational frequency limit vT1 from the reference rotational frequency vT0 by the ratio of the voltage change amounts (ΔVbat2/ΔVbat1), for example. Contrarily, in a case where ΔVbat2 is larger than ΔVbat1, the amount of decrease of the second rotational frequency limit vT2 from the first rotational frequency limit vT1 is made larger than the amount of decrease of the first rotational frequency limit vT1 from the reference rotational frequency vT0. Accordingly, the upper limit of the target rotational speed of each of the travel motors 30 and 31 is adjusted.

Therefore, since the target rotational frequency of each of the travel motors 30 and 31 can be decreased in steps according to an increase in the load on the battery 82, it is possible to protect the battery 82 while suppressing a decrease in work efficiency, as compared to a case in which the target rotational frequency is decreased significantly all at once. In the present example, the other configurations and functions are the same as those of FIG. 1 to 4.

In the case of the present example, regarding FIG. 5, it is also possible to have such a configuration in which the upper limit of the target rotational frequency of each deck motor 60 is adjusted according to the magnitude of the change amount in battery voltage from the reference voltage V1, instead of or together with each of the travel motors 30 and 31.

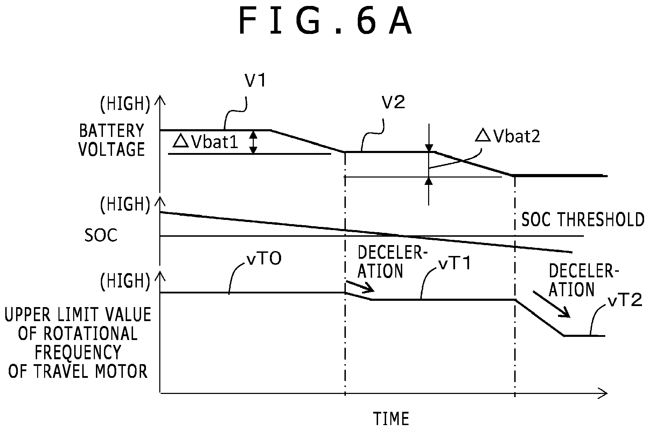

In FIG. 6A, the time course of voltage of the battery 82, remaining charge amount (SOC) of the battery 82, and upper limit value of the rotational frequency of the travel motors 30 and 31 in another example of the embodiment is illustrated. In the configuration of the present example, the battery condition monitored by the battery monitoring device 90 includes a battery voltage and a remaining charge amount (SOC) of the battery 82. SOC can be expressed as a percentage (%) of the remaining charge amount to the full charge amount of the battery 82.

Each time a change of battery voltage occurs, the control device 40 adjusts the upper limit of the target rotational frequency of each of the travel motors 30 and 31 according to the change amount from the reference voltage V1 or V2 and a measured value of SOC. Therefore, the battery monitoring device 90 calculates the SOC by using, for example, a detected value of a current sensor that detects the input and output current of the battery 82 or a detected value of the current sensor and a detected value of a voltage sensor that detects the voltage of the battery 82. Measured values of SOC are output to the control device 40.

In the example illustrated in FIG. 6A, as in the case of FIG. 5, the magnitude of the change amount in the battery voltage Vb from the reference voltage V1 becomes the first threshold ΔVbat1, and the battery voltage Vb decreases to the voltage V2 and then decreases further from the voltage V2. Further, after the battery voltage Vb decreases by the first threshold ΔVbat1, the measured value of SOC of the battery 82 decreases to be lower than the SOC threshold before the battery voltage Vb decreases to be lower than the voltage V2.

In the present example, in a case where the measured value of SOC is the SOC threshold or higher, if the battery voltage Vb decreases with the magnitude of the change amount in the battery voltage Vb from the reference voltage V1 being the first threshold ΔVbat1 or larger, the control device 40 decreases the upper limit of the target rotational frequency of each of the travel motors 30 and 31 to the set first rotational frequency limit vT1. On the other hand, if the battery voltage Vb decreases to be lower than the voltage V2 and the measured value of SOC decreases to be lower than the SOC threshold, the control device 40 decreases the upper limit of the target rotational frequency of each of the travel motors 30 and 31 to the set second rotational frequency limit vT2. Here, the decrease amount in rotational frequency limit is changed depending on whether or not the measured value of SOC has decreased to be lower than the SOC threshold. That is, in a case where the SOC measurement value is lower than the SOC threshold, the decrease amount in rotational frequency limit is controlled to be larger than the case in which the SOC measurement value is the SOC threshold or higher.

The change amount in voltage of the battery 82 varies with SOC. For lithium-ion batteries in particular, the correlation between battery voltage and SOC is high. Therefore, by using a change amount in voltage of the battery 82 and a measured value of SOC to set a decrease amount in the rotational frequency limit of each of the travel motors 30 and 31, both protection of the battery 82 and improvement of work efficiency can be achieved with higher precision. In the present example, the other configurations and functions are the same as those of FIG. 1 to 4.

In the case of the present example, regarding FIG. 6A, it is also possible to have such a configuration in which the upper limit of the target rotational frequency of each deck motor 60 is adjusted according to the change amount in battery voltage from the reference voltage V1 and the measured value of SOC, instead of or together with each of the travel motors 30 and 31.

Further, regarding the above-described configuration explained using FIG. 6A, it is also possible to have such a configuration in which the values of the first threshold ΔVbat1 and the threshold ΔVbat2a are changed according to measured values of SOC. For example, the value of the threshold in a case where the measured value of SOC is higher than 0 and lower than 30% may be different from the value of the threshold in a case where the measured value of SOC is 30% or higher.

Further, regarding each of the above-described examples, it is also possible to have such a configuration in which the upper limit of the target rotational frequencies of at least one of the travel motors 30 and 31 and the deck motors 60 is decreased by using the change rate of battery voltage to the reference voltage V1 or V2, instead of the decrease amount in battery voltage from the reference voltage V1 or V2. Further, although, in the configuration explained using FIG. 6A, the change amount in battery voltage and the measured value of SOC are used to determine whether or not to decrease the upper limit of the target rotational frequencies of at least one of the travel motors 30 and 31 and the deck motors 60, it is also possible to use a measured value of the maximum discharge current of the battery 82, instead of the measured value of SOC. Here, it is also possible to have such a configuration in which, if the measured value of the maximum discharge current is a predetermined current value or higher and the change amount or change rate of battery voltage from the reference voltage V1 is a predetermined value or higher, the upper limit of the target rotational frequencies of at least one of the travel motors 30 and 31 and the deck motors 60 is decreased more significantly, configured to the case in which the measured value of the maximum discharge current is lower than the predetermined current value. According to this configuration, it is possible to achieve both protection of the battery 82 and improvement of work efficiency with higher precision.

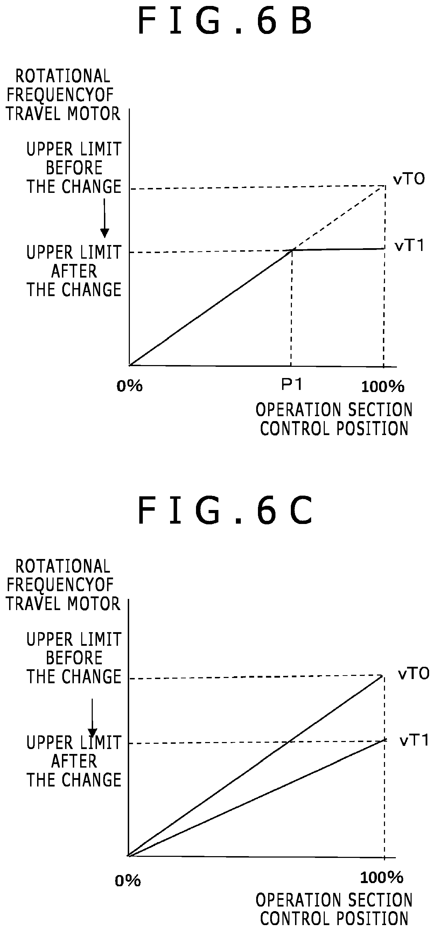

In each of the above-described examples, the configuration for decreasing the upper limit of the target rotational frequency of each of the travel motors 30 and 31 could be, for example, the method illustrated in FIG. 6B or FIG. 6C. FIG. 6B is a diagram in which an example of the case of decreasing the upper rotational frequency limit of the travel motors 30 and 31 in the embodiment is illustrated with a relationship between the rotational frequency of the travel motors 30 and 31 and the control position of the operation levers 22 and 23, which constitute the operation section. In the method illustrated in FIG. 6B, under the normal condition in which the upper rotational frequency limit of the travel motors is not decreased, in a case where the control position, i.e., the operation position, of the operation levers 22 and 23 is 0% at the initial position which directs the travel motors to stop and is 100% at the position directing the rotational frequency of the travel motors to be the highest, the control position and the rotational frequency have a directly proportional relationship in the entire area of the control position. As the control position approaches 100%, the rotational frequency of the travel motors become linearly higher. Here, the upper rotational frequency limit of the travel motors is vT0 at the timing where the control position is 100%. On the other hand, in a case where the upper rotational frequency limit of the travel motors is decreased, the rotational frequency of the travel motors is the upper rotational frequency limit vT1, which is lower than the upper rotational frequency limit vT0 before the change, within the range of the control position from the predetermined position P1, which is lower than 100%, to 100%.

FIG. 6C is a diagram in which another example of the case of decreasing the upper rotational frequency limit of the travel motors 30 and 31 in the embodiment is illustrated with a relationship between the rotational frequency of the travel motors 30 and 31 and the control position of the operation levers 22 and 23, which constitute the operation section. In the method illustrated in FIG. 6C, the relationship between the control position and the rotational frequency of the travel motors under the normal condition is the same as in FIG. 6B. On the other hand, in a case where the upper rotational frequency limit of the travel motors is decreased, the control position of 100% corresponds to the upper rotational frequency limit vT1, which is lower than the upper rotational frequency limit vT0 before the change. Further, if the control position is other than 100%, the rotational frequency increases linearly from 0 toward vT1 as the control position approaches 100% from the initial position. In this case, the rotational frequency corresponding to the control position is lower in the entire range of the control position, as compared to the case under the normal condition.

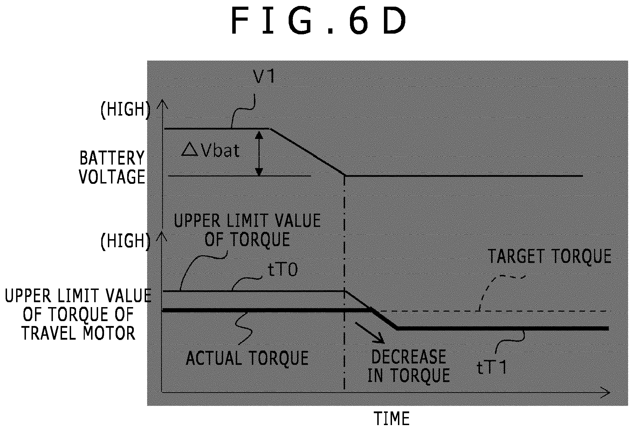

FIG. 6D is a diagram corresponding to FIG. 4 in another example of the embodiment. In the configuration of the present example, each of the operation levers 22 and 23 directs the target torque of the corresponding travel motor 30 or 31, based on its control position. In a case where the battery voltage Vb decreases with the magnitude of the change amount in the battery voltage Vb from the reference voltage V1 being the first threshold ΔVbat or higher, the control device decreases the upper limit of the target torque of each of the travel motors 30 and 31 from a reference torque tT0 to a set first torque limit tT1. Accordingly, both protection of the battery 82 and improvement of work efficiency can be achieved. In FIG. 6D, an example of the change in actual torque is illustrated with the thick solid line in the lower portion of the drawing. In a case where the torque upper limit value, which is the upper limit of target torque, is decreased from tT0 to the first torque limit tT1 as in FIG. 6D, the actual torque also decreases to tT1 if the first torque limit tT1 is lower than the target torque after the decrease in the torque upper limit value. Accordingly, since the load on the battery 82 can be reduced by the decrease in the actual torque, both protection of the battery 82 and improvement of work efficiency can be achieved.

Regarding FIG. 6D, it is also possible to have such a configuration in which the upper limit of the target torque of each of the deck motors 60 is adjusted according to the magnitude of the change amount in the battery voltage Vb from the reference voltage V1, instead of or together with each of the travel motors 30 and 31. For example, it is also possible that each of the deck motors 60 is configured so that, in a case where the battery voltage Vb decreases with the magnitude of the change amount in the battery voltage Vb from the reference voltage V1 being the first threshold ΔVbat or higher, the target torque decreases from a reference torque to a torque limit. In the present example, the other configurations and functions are the same as those of FIG. 1 to 4.

Although, in each of the above-described examples, the case is described in which the upper limit of the target rotational frequency or target torque of motors is decreased if the voltage of a battery changes significantly, it is also possible that the motors are controlled so that the upper limit of the actual rotational frequency or actual torque of the motors is decreased.

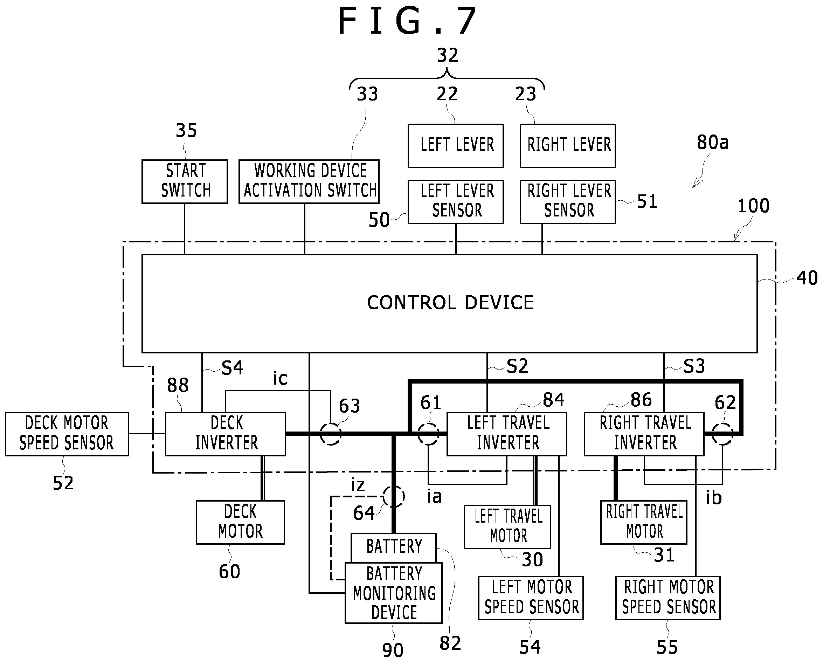

FIG. 7 is a block diagram illustrating a control system 80a of a vehicle in another example of the embodiment. In the configuration of the present example, the maximum discharge current is specified for the battery 82 for driving each of the travel motors 30 and 31 and each of the deck motors 60. The specified value of the maximum discharge current is stored in advance in a storage section of the control device 40 or is obtained from the battery monitoring device 90 via a signal line S1 which is a communication unit. Here, it is also possible to have such a configuration in which the maximum discharge current is constantly sent from the battery monitoring device 90 via CAN communication. Instead of signal lines, it is also possible that the battery monitoring device 90 and the control device 40 have a wireless communication section as a communication unit for mutually sending and receiving wireless signals.

Further, the vehicle is also equipped with a first current sensor 61 that detects a discharge current ia which is output from the battery 82 to the left travel inverter 84, a second current sensor 62 that detects a discharge current ib which is output from the battery 82 to the right travel inverter 86, and a third current sensor 63 that detects a discharge current ic which is output from the battery 82 to each of the deck inverters 88. The first current sensor 61, the second current sensor 62, and the third current sensor 63 configure a current sensor that measures the actual discharge current of the battery 82.

Detected values of the first current sensor 61 are obtained by the left travel inverter control device of the left travel inverter 84. Detected values of the second current sensor 62 are obtained by the right travel inverter control device of the right travel inverter 86. Detected values of the third current sensor 63 are obtained by the deck inverter control device of the deck inverters 88. The control device 40 obtains, via signal lines S2, S3, and S4, the detected values of the discharge current from the battery 82 to each of the travel inverters 84 and 86, which are obtained by each of the travel inverters 84 and 86, and the detected values of the discharge current from the battery 82 to the deck inverters 88, which are obtained by the deck inverters 88, so as to calculate the actual discharge current of the battery 82, based on the sum of the respective detected values. Here, it is also possible to have such a configuration in which the detected values of the discharge current obtained by each of the inverters 84, 86, and 88 are constantly sent from each of the inverters 84, 86, and 88 via CAN communication. Instead of signal lines, it is also possible that each of the inverters 84, 86, and 88 and the control device 40 have a wireless communication section as a communication unit for sending and receiving wireless signals between the inverters 84, 86, and 88 and the control device 40.

Furthermore, the control device 40 controls the rotational speed of each of the travel motors 30 and 31 so that the actual discharge current of the battery 82 does not exceed the specified maximum discharge current while each deck motor 60 is being driven. For example, the control device 40 decreases the target rotational frequency of each of the travel motors 30 and 31 in a case where the actual discharge current of the battery 82 reaches a threshold current, which is lower than the maximum discharge current. Here, for example, the control device 40 gradually, e.g., linearly, decreases the target rotational frequency of the travel motors 30 and 31 in a predetermined time period, which is set in advance, by the first predetermined amount or first predetermined rate, which is set in advance, regardless of operations on the left and right operation levers 22 and 23. Here, to further enhance safety during traveling of the vehicle, it is also possible to have such a configuration in which, in a case where the left and right operation levers 22 and 23 are operated to decrease the speed of the vehicle, the target rotational frequency of the travel motors 30 and 31 is decreased according to the operation.

According to the configuration of the present example, by the control of the rotational frequency of each of the travel motors 30 and 31, it is possible to prevent the actual discharge current of the battery 82 from exceeding the maximum discharge current while each deck motor 60 is being driven. Thus, it is possible to prevent the vehicle from stopping abruptly even in a case where the process of cutting off the current flowing from the battery 82 to each of the motors 30, 31, and 60 is performed for the purpose of protecting the battery 82.

Further, if the control section 100 is configured to obtain the maximum discharge current from the battery monitoring device 90 via a communication unit, in a case where the type of battery is changed, it is only necessary to change the setting of the battery monitoring device 90 to set the maximum discharge current according to the type of battery, and thus there is no need to change the setting of the control section 100.

Further, as illustrated with a dashed line in FIG. 7, it is also possible that the vehicle is configured with a battery current sensor 64 that detects an actual discharge current iz which is output from the battery 82. Further, it is also possible to have such a configuration in which the battery monitoring device 90 obtains detected values of the battery current sensor 64, and detected values of the actual discharge current iz, which are obtained by the battery monitoring device 90, are obtained by the control device 40 via a signal line or wireless communication section serving as a communication unit. According to this configuration, in order for the control device 40 to obtain the actual discharge current of the battery 82, it is not necessary that the current sensor that detects the discharge current of the battery 82 and the control device 40 are connected only with a signal line dedicated to send detected values of the actual discharge current of the battery 82.

Further, in the description above, although a current sensor that detects the discharge current output from the battery 82 to the inverters 84, 86, and 88 is installed separately from each of the inverters 84, 86, and 88, it is also possible that the current sensor is included inside the inverter control device of each of the inverters 84, 86, and 88.

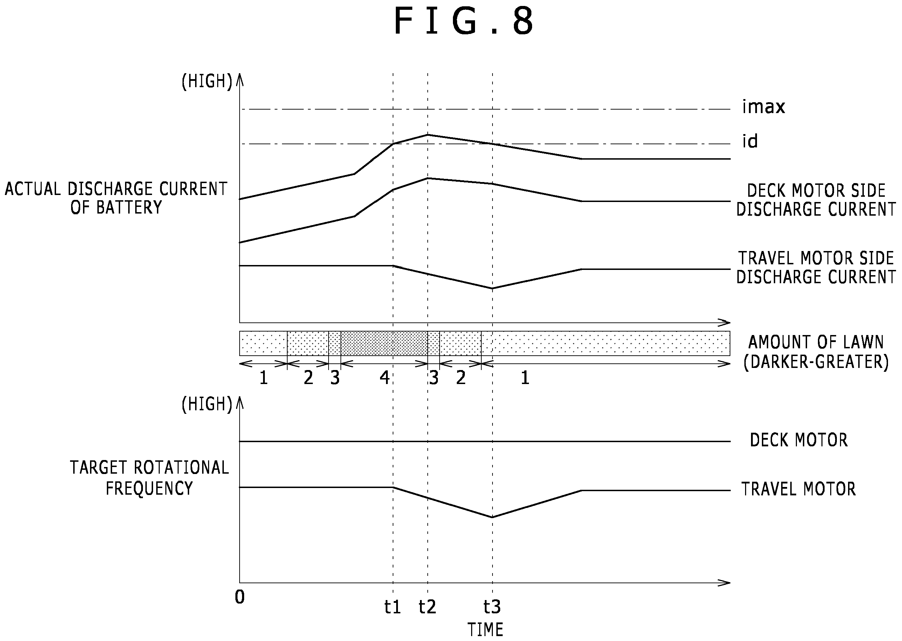

In FIG. 8, the discharge current from the battery 82 to the deck inverters 88 (the deck motor side discharge current) and the discharge current to the travel inverters 84 and 86 (the travel motor side discharge current) as well as the time course of the target rotational frequencies of the deck motors 60 and the travel motors 30 and 31 in another example of the embodiment is illustrated. In FIG. 8, the change in the amount of lawn in a travel path of the vehicle is illustrated with shading, and darker shading indicates a greater amount of lawn at the position of the vehicle at that point in time. In the part indicating the amount of lawn, the amount of lawn is approximately constant in each of the respective ranges indicated by multiple arrows, and, as the number assigned to an arrow is larger, the amount of lawn is greater.

As illustrated in FIG. 8, the target rotational frequency of the deck motors 60 is constant. Further, the amount of operation of the left and right operation levers 22 and 23 toward the front side is constant from time 0 to t1, and thus the target rotational frequency of each of the travel motors 30 and 31 is also constant. During the time when the vehicle travels, the amount of lawn gradually increases from time 0 toward t1, and thus the load on the deck motor 60 becomes higher and the discharge current on the deck motor side becomes higher. Further, in the case at time t1 where the actual discharge current of the battery 82 reaches a threshold current id, which is lower than the maximum discharge current imax, the target rotational frequency of each of the travel motors 30 and 31 decreases thereafter. Accordingly, since the vehicle speed decreases and thus the load on the deck motors 60 decreases, the discharge current of the deck motors 60 rises more slowly from time t1 to time t2 than it did before then, and the discharge current of the deck motors 60 decreases after time t2. Then, the actual discharge current of the battery 82 gradually decreases and reaches the threshold current id at time t3. Therefore, the limit control of the target rotational frequency of each of the travel motors 30 and 31 is released, and thus the target rotational frequency of each of the travel motors 30 and 31 is restored to the target rotational frequency corresponding to the operation amount of the left and right operation levers 22 and 23.

Since the actual discharge current of the battery 82 is prevented from exceeding the maximum discharge current in this way, protection of the battery 82 can be achieved while preventing the vehicle from stopping abruptly. Accordingly, both protection of the battery 82 and improvement of work efficiency can be achieved. In the present example, the other configurations and functions are the same as those of FIG. 1 to 4. In the configuration of the present example, it is also possible to have such a configuration in which the control device 40 controls the rotational speed of each of the travel motors 30 and 31 so that a predicted future discharge current, which is calculated from the trend of past or current detected discharge current of the battery 82, does not exceed the specified maximum discharge current during the time when each of the deck motors 60 is being driven.

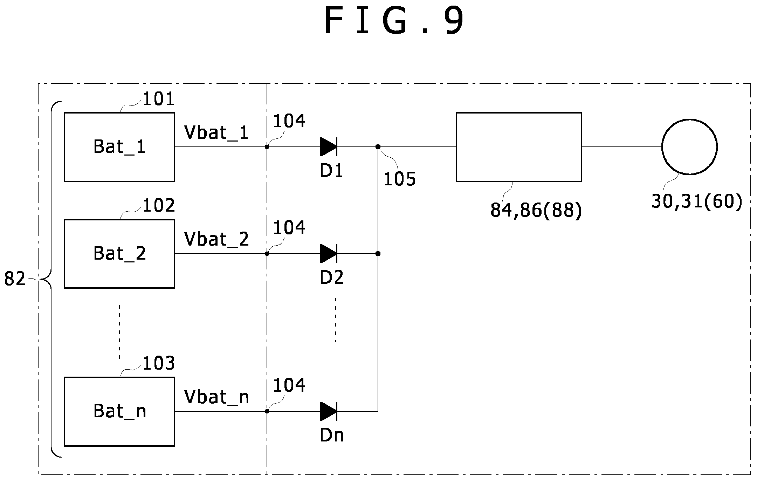

In FIG. 9, an overview of a circuit configuration to provide power from the battery 82 to the travel motors 30 and 31 (or the deck motors 60) in another example of the embodiment is illustrated. In the present example, the battery 82 is configured with multiple battery packs 101, 102, and 103. In the present example, the battery 82 has n battery packs 101, 102, and 103. The multiple battery packs 101, 102, and 103 are removably connected to pack connection sections 104, respectively, which enables the multiple battery packs 101, 102, and 103 to be electrically connected in parallel to the travel inverters 84 and 86 (or the deck inverters 88). Although the following explanation focuses on the configuration in which the battery 82 and the travel motors 30 and 31 are connected via the travel inverters 84 and 86, the same applies to the configuration in which the battery 82 and the deck motors 60 are connected via the deck inverters 88.

The pack connection sections 104 are connectors such as plugs that are removably connected to connectors of the battery packs 101, 102, and 103. Since such pack connection sections 104 have a well-known structure in the field of battery connection sections for electrically power assisted bicycles, etc., a detailed description is omitted. The user can easily attach and detach each of the multiple battery packs 101, 102, and 103 to the independently corresponding pack connection section 104. The battery packs 101, 102, and 103 have the voltage Vbat_1, Vbat_2, ..., and Vbat_n, respectively.

One end side of each of multiple forward directional converters D1, D2, ..., and Dn, which can flow current from the corresponding battery packs 101, 102, and 103 only in the direction of outputs to the travel motors 30 and 31 side, i.e., the load sections, is connected to the respective multiple pack connection sections 104. The forward directional converters D1, D2, ..., and Dn are diodes, for example. The other ends of the multiple forward directional converters D1, D2, ..., and Dn are connected at a connection section 105. The travel motors 30 and 31 are connected to the connection section 105 via the travel inverters 84 and 86.

According to the configuration of the present example, in a case of outputting power from the multiple battery packs 101, 102, and 103 to the load sections, current can be output to the loads in order from the battery pack 101, 102, or 103 with the highest voltage among the multiple battery packs 101, 102, and 103. Accordingly, there is no need to align the voltage of the multiple battery packs 101, 102, and 103 in advance before outputting current from the battery 82 to the load sections. Thus, it is possible to charge the battery 82 without excessively adjusting the voltage or charge amount of the multiple battery packs 101, 102, and 103. Furthermore, the voltage of the battery 82 can be more stabilized.

In FIG. 9, the case in which n is equal to 3 (n = 3) and the initial voltages of the multiple battery packs 101, 102, and 103 at the time of being connected to the pack connection sections 104 are Vbat_1 > Vbat_2 > Vbat_n is considered. In this case, since power is supplied from the battery pack 101, which has the highest voltage, to the load section side prior to the other battery packs 102 and 103, the voltage of the battery pack 101 decreases. Further, in a case where the voltages of the two battery packs 101 and 102 are equal to each other (Vbat 1 = Vbat_2), power is supplied from both of the two battery packs 101 and 102 to the load section side. Accordingly, the voltages of the two battery packs 101 and 102 decrease.

Furthermore, in a case where the voltages of the three battery packs 101, 102, and 103 are equal to each other (Vbat_1 = Vbat_2 = Vbat_3), power can be supplied from all of the three battery packs 101, 102, and 103 to the load section side.

In the present example, the other configurations and functions are the same as those of FIG. 1 to 4. Note that the configuration of the present example may be combined with the configuration of FIG. 5, the configuration of FIG. 6A and FIG. 6D, or the configuration of FIG. 7 and FIG. 8.

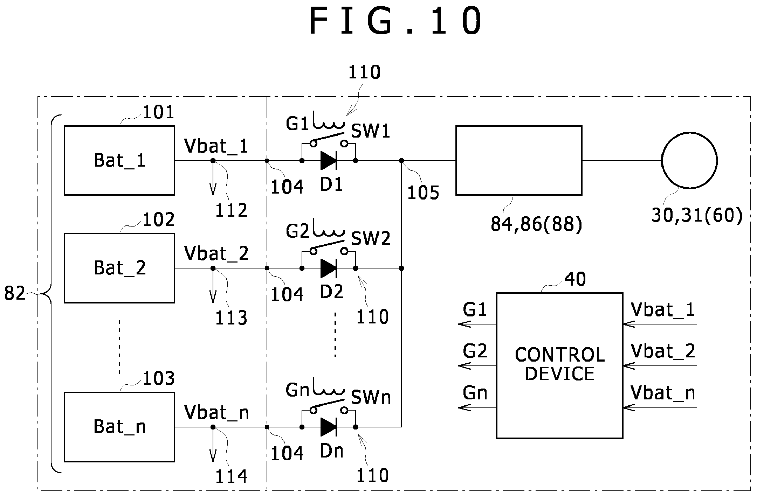

In FIG. 10, an overview of a circuit configuration to provide power from the battery 82 to the travel motors 30 and 31 (or the deck motors 60) in another example of the embodiment is illustrated. In the present example, one end sides of first bidirectional converters 110 are respectively connected to the multiple pack connection sections 104, to which the battery packs 101, 102, and 103 are connected, in parallel to the forward directional converters D1, D2, ..., and Dn. The other end sides of the first bidirectional converters 110 are connected to the travel motors 30 and 31 (or the deck motors 60) via the connection section 105 and the travel inverters 84 and 86 (or the deck inverters 88).

The first bidirectional converters 110 are the switches SW1, SW2, ..., and SWn that are connected in parallel to the forward directional converters D1, D2, ..., and Dn. The switches SW1, SW2, ..., and SWn are semiconductor switches or mechanical switches whose switching of conduction is controlled by a control signal that is output from the control device 40. By switching, each of the first bidirectional converters 110 can flow current in both of the direction of outputs from the corresponding battery packs 101, 102, and 103 and direction of inputs to the corresponding battery packs 101, 102, and 103.

Furthermore, the vehicle is equipped with voltage sensors 112, 113, and 114 that detect voltages of the multiple battery packs 101, 102, and 103, respectively. The detected signals representing detected values Vbat_1, Vbat_2, and Vbat_3 of the voltage sensors 112, 113, and 114 are output to the control device 40.

The control device 40 determines whether or not the voltages of two or more of the multiple battery packs 101, 102, and 103 match, based on the detected values of the voltage sensors 112, 113, and 114. Further, in a case where it is determined by the control device 40 that voltages of two or more of the battery packs 101, 102, and 103 match, the control device 40 outputs the control signals G1, G2, and Gn, which are for switching to bidirectionally conductive, to the first bidirectional converters 110 corresponding to the battery packs 101, 102, and 103 whose voltages have matched. Accordingly, the first bidirectional converters 110 corresponding to the battery packs 101, 102, and 103 those voltages have matched are switched to bidirectionally conductive.

According to the configuration of the present example, by switching the first bidirectional converters 110 to bidirectionally conductive, power can be supplied to the battery packs 101, 102, and 103 from the load section side by power regeneration or the like to charge the battery 82.

Furthermore, in a case where voltages of two or more of the battery packs 101, 102, and 103 match, the first bidirectional converters 110 corresponding to the battery packs 101, 102, and 103 whose voltages have matched are switched to bidirectionally conductive. Accordingly, in a case where power can be supplied to the battery packs 101, 102, and 103 from the load section side, it is possible to prevent power from being input or output among the battery packs 101, 102, and 103. Accordingly, the voltage of the battery 82 can be more stabilized.

In FIG. 10, the case in which n is equal to 3 (n = 3) and the initial voltage of the multiple battery packs 101, 102, and 103 at the time of being connected to the pack connection sections 104 are Vbat_1 > Vbat_2 > Vbat_n is considered. In this case, if the battery pack 101 with the highest voltage is attached to the pack connection section 104, the control device 40 switches the corresponding first bidirectional converter 110 to bidirectionally conductive. Further, the voltage of the battery pack 101 is decreased as power is supplied from the battery pack 101 to the load section side.

Next, in a case where the voltages of the two battery packs 101 and 102 are equal to each other (Vbat 1 = Vbat_2), both of the first bidirectional converters 110 corresponding to the two battery packs 101 and 102 are switched to bidirectionally conductive. Here, power is supplied to the load section side from both of the two battery packs 101 and 102. Accordingly, the voltages of the two battery packs 101 and 102 decrease.

Furthermore, in a case where the voltages of the three battery packs 101, 102, and 103 are equal to each other (Vbat_1 = Vbat_2 = Vbat_3), all of the first bidirectional converters 110 corresponding to the three battery packs 101, 102, and 103 are switched to bidirectionally conductive. Here, power is supplied to the load section side from all of the three battery packs 101, 102, and 103.

In the present example, the other configurations and functions are the same as those of FIG. 1 to 4 or the configurations of FIG. 9. Note that the configuration of the present example may be combined with the configuration of FIG. 5, the configuration of FIG. 6A, the configuration of FIG. 6D, or the configuration of FIG. 7 and FIG. 8. If such a configuration that can stabilize the battery voltage as described above is combined with the configuration of FIG. 1 to FIG. 4, the configuration of FIG. 5, the configuration of FIG. 6A, the configuration of FIG. 6D, or the configuration of FIG. 7 and FIG. 8, protection of the battery 82 becomes easier.

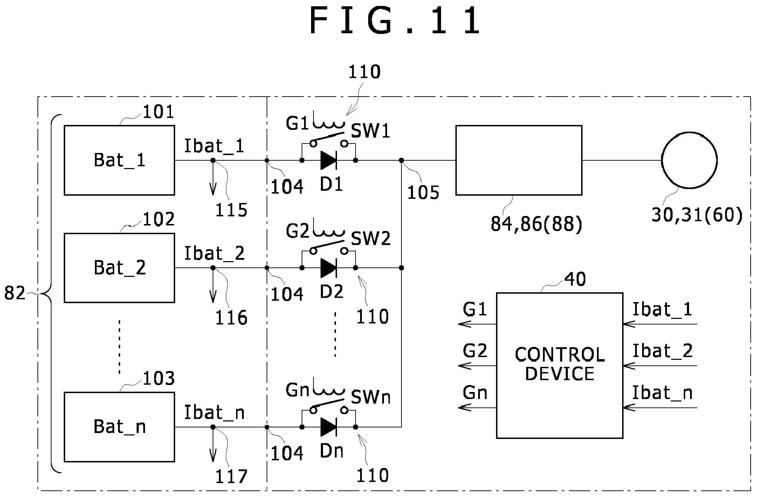

In FIG. 11, an overview of a circuit configuration to provide power from the battery 82 to the travel motors 30 and 31 (or the deck motors 60) in another example of the embodiment is illustrated. In the present example, instead of omitting voltage sensors that detect voltages of the respective battery packs 101, 102, and 103, current sensors 115, 116, and 117 that detect the current values Ibat_1, Ibat_2, and Ibat_3 that are output from the respective battery packs 101, 102, and 103 are installed on the vehicle. Detected signals of the current sensors 115, 116, and 117 are output to the control device 40.

The control device 40 determines whether or not voltages of two or more of the multiple battery packs 101, 102, and 103 match, based on the detected values of the respective current sensors 115, 116, and 117. Further, in a case where it is determined by the control device 40 that voltages of two or more of the battery packs 101, 102, and 103 match, the control device 40 outputs the control signals, which are for switching to bidirectionally conductive, to the first bidirectional converters 110 corresponding to the battery packs 101, 102, and 103 whose voltages have matched. Accordingly, the first bidirectional converters 110 corresponding to the battery packs 101, 102, and 103 those voltages have matched are switched to bidirectionally conductive.

According to the configuration of the present example, as with the configuration of FIG. 10, by switching the first bidirectional converters 110 to bidirectionally conductive, power can be supplied to the battery packs 101, 102, and 103 from the load section side by power regeneration or the like to charge the battery 82. In the present example, the other configurations and functions are the same as those of FIG. 10.

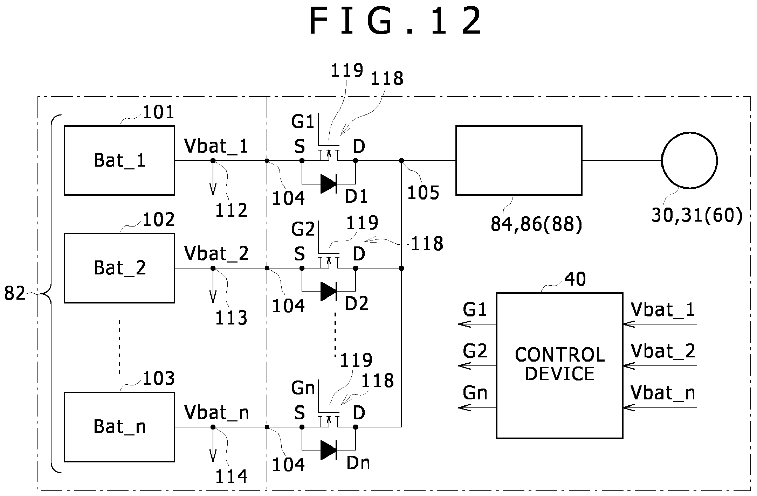

In FIG. 12, an overview of a circuit configuration to provide power from the battery 82 to the travel motors 30 and 31 (or the deck motors 60) in another example of the embodiment is illustrated. In the present example, second bidirectional converters 118 are connected between the pack connection sections 104 and the connection section 105, instead of the first bidirectional converters 110 in the configuration of FIG. 10.

The second bidirectional converters 118 are configured of electric field effect transistors (FET) with parasitic diodes. The second bidirectional converters 118 are controlled to switch conduction by control signals that are output from the control device 40. By switching, each of the second bidirectional converters 118 can flow current in both of the direction of outputs from the corresponding battery packs 101, 102, and 103 and direction of inputs to the corresponding battery packs 101, 102, and 103.

In FIG. 12, the case in which n is equal to 3 (n = 3) and the initial voltage of the multiple battery packs 101, 102, and 103 at the time of being connected to the pack connection sections 104 are Vbat_1 > Vbat_2 > Vbat_n is considered. In this case, if the battery pack 101 with the highest voltage is attached to the pack connection section 104, the control device 40 switches the corresponding second bidirectional converter 118 to bidirectionally conductive. Further, the voltage of the battery pack 101 is decreased as power is supplied from the battery pack 101 to the load section side.

Next, in a case where the voltages of the two battery packs 101 and 102 are equal to each other (Vbat 1 = Vbat_2), both of the second bidirectional converters 118 corresponding to the two battery packs 101 and 102 are switched to bidirectionally conductive. Here, power is supplied to the load section side from both of the two battery packs 101 and 102. Accordingly, the voltages of the two battery packs 101 and 102 decrease.

Furthermore, in a case where the voltages of the three battery packs 101, 102, and 103 are equal to each other (Vbat_1 = Vbat_2 = Vbat_3), all of the second bidirectional converters 118 corresponding to the three battery packs 101, 102, and 103 are switched to bidirectionally conductive. Here, power is supplied to the load section side from all of the three battery packs 101, 102, and 103.

In the present example, the other configurations and functions are the same as those of FIG. 1 to FIG. 4, the configurations of FIG. 9, or the configurations of FIG. 10. Note that the configuration of the present example may be combined with the configuration of FIG. 5, the configuration of FIG. 6A, the configuration of FIG. 6D, the configuration of FIG. 7 and FIG. 8, or the configuration of FIG. 11.

At least one of the above-described respective embodiments has the configuration of the first electric work vehicle according to the present disclosure. Accordingly, since the load on the battery can be reduced by decreasing the upper limit of rotational speed of a motor in a case where the load on the battery becomes high, such as in a case where the change amount in voltage of the battery that supplies power to the motor becomes large, it is possible to achieve both protection of the battery and improvement of work efficiency.

Regarding the first electric work vehicle, it is also possible to have such a configuration wherein, in a case where a change amount in voltage of the battery from a reference voltage or a magnitude of a change rate of voltage of the battery to the reference voltage is a first threshold or higher, the control section decreases the upper limit of rotational speed of the motor to a set first rotational speed limit.

Regarding the first electric work vehicle, it is also possible to have such a configuration wherein, each time a change in voltage of the battery occurs, the control section adjusts the upper limit of rotational speed of the motor according to a change amount from a reference voltage or a magnitude of a change rate to the reference voltage.

According to the above-described configuration, it is possible to protect the battery while suppressing a decrease in work efficiency, as compared to a case in which the target rotational speed is decreased significantly all at once.

Regarding the first electric work vehicle, it is also possible to have such a configuration wherein the battery condition includes a remaining charge amount of the battery, and wherein, each time a change in voltage of the battery occurs, the control section adjusts the upper limit of rotational speed of the motor according to a change amount from a reference voltage or a change rate to the reference voltage, and the remaining charge amount.

According to the above-described configuration, it is possible to achieve both protection of the battery and improvement of work efficiency with higher precision.

Regarding the first electric work vehicle, it is also possible to have such a configuration further including a battery monitoring device configured to monitor the battery condition, wherein the control section decreases an upper limit of target rotational speed of the motor so as to decrease an upper limit of actual rotational speed, based on a detected result with regard to the battery condition from the battery monitoring device. Regarding the first electric work vehicle, it is also possible to have such a configuration wherein the at least one motor is a travel motor which drives the at least one travelling device and a work motor which drives the at least one working device.

At least one of the above-described respective embodiments has the configuration of the second electric work vehicle according to the present disclosure. Accordingly, since the load on the battery can be reduced by decreasing the upper limit of torque of a motor in a case where the load on the battery becomes high, such as in a case where the change amount in voltage of the battery that supplies power to the motor becomes large, it is possible to achieve both protection of the battery and improvement of work efficiency.

At least one of the above-described respective embodiments has the configuration of the third electric work vehicle according to the present disclosure. Accordingly, by controlling the rotational speed of the travel motor, it is possible to prevent the discharge current of the battery from exceeding the maximum discharge current during driving of the work motor. Thus, it is possible to prevent the vehicle from stopping abruptly even in a case where the process of cutting off the current flowing from the battery to each motor is performed for the purpose of protecting the battery. Accordingly, both protection of the battery and improvement of work efficiency can be achieved.

Regarding the third electric work vehicle, it is also possible to have such a configuration further including a battery monitoring device configured to monitor a condition of the battery, wherein the control section obtains the maximum discharge current from the battery monitoring device via a communication unit.

According to the above-described configuration, in a case where the type of battery is changed, it is only necessary to change the setting of the battery monitoring device to set the maximum discharge current according to the type of battery, and thus there is no need to change the setting of the control section.

Regarding the third electric work vehicle, it is also possible to have such a configuration wherein the travel motor is driven by a travel inverter, wherein the work motor is driven by a work inverter, and wherein the control section calculates the discharge current from a sum of a detected value of a discharge current from the battery to the travel inverter, which is obtained by the travel inverter, and a detected value of a discharge current from the battery to the work inverter, which is obtained by the work inverter.

According to the above-described configuration, in order for the control section to obtain the discharge current of the battery, it is not necessary that the current sensor that detects the discharge current of the battery and the control section are connected only with a signal line dedicated to send detected values of the actual discharge current of the battery.

Regarding the third electric work vehicle, it is also possible to have such a configuration further including a battery monitoring device configured to monitor a condition of the battery, wherein the control section obtains the discharge current from the battery monitoring device via a communication unit.

According to the above-described configuration, in order for the control section to obtain the actual discharge current of the battery, it is not necessary that the current sensor that detects the discharge current of the battery and the control section are connected only with a signal line dedicated to send detected values of the actual discharge current of the battery.

Regarding the third electric work vehicle, it is also possible to have such a configuration further including a sensor configured to measure the discharge current of the battery, wherein the control section obtains the discharge current from the sensor via a communication unit.

Regarding any one of the first electric work vehicle, the second electric work vehicle, and the third electric work vehicle, it is also possible to have such a configuration wherein, regarding the battery, a plurality of battery packs are removably connected to a plurality of pack connection sections, so that the plurality of battery packs can be electrically connected in parallel, and wherein forward directional converters that can flow current only in a direction of an output from the corresponding battery packs are connected to the plurality of pack connection sections, respectively.

According to the above-described configuration, in a case of outputting power from the multiple battery packs to the load sections, current can be output to the load sections in order from the battery pack with the highest voltage among the multiple battery packs. Accordingly, there is no need to align the voltages of the multiple battery packs in advance before outputting current from the battery to the load sections. Thus, it is possible to charge the battery without excessively adjusting the voltages or charge amounts of the multiple battery packs.

Regarding any one of the first electric work vehicle, the second electric work vehicle, and the third electric work vehicle, it is also possible to have such a first configuration wherein, regarding the battery, a plurality of battery packs are removably connected to a plurality of pack connection sections, so that the plurality of battery packs can be electrically connected in parallel, and wherein bidirectional converters that can flow current in both of a direction of an output from the corresponding battery packs and a direction of an input to the corresponding battery packs by switching therebetween are connected to the plurality of pack connection sections, respectively.

According to the above-described first configuration, by switching the bidirectional converters to bidirectionally conductive, power can be supplied to the battery packs from the load side by power regeneration or the like, in order to charge the battery.

Regarding the above-described first configuration, it is also possible to have such a configuration further including a voltage sensor configured to detect voltages of the plurality of battery packs, respectively, wherein, based on a detected value of the voltage sensor, whether or not voltages of two or more of the plurality of battery packs match is determined.

According to the above-described configuration, if the voltages of two or more battery packs match, in a case where the bidirectional converters corresponding to the battery packs whose voltages has matched are configured to be switched to bidirectionally conductive, wherein power can be supplied to the battery packs from the load section side, it is possible to prevent input and output of power among the battery packs.

Regarding the above-described first configuration, it is also possible to have such a configuration including a current sensor configured to detect current values that are output from the plurality of battery packs, respectively, wherein, based on a detected value of the current sensor, whether or not voltages of two or more of the plurality of battery packs match is determined.

According to the above-described configuration, if the voltages of two or more battery packs match, in a case where the bidirectional converters corresponding to the battery packs whose voltages match are configured to be switched to bidirectionally conductive, wherein power can be supplied to the battery packs from the load section side, it is possible to prevent input and output of power among the battery packs.

According to an electric work vehicle of the present disclosure, it is possible to achieve both protection of a battery and improvement of work efficiency.

## Claims

1. An electric work vehicle comprising:
at least one motor to drive one or both of a travelling device and a working device included in a vehicle;
an operation section to direct a rotational speed or actuation of the motor;
a control section to control the motor according to an operation of the operation section; and
a battery to supply power to the motor,
wherein the control section decreases an upper limit of rotational speed of the motor, based on a detected result with regard to a battery condition including a voltage of the battery.

2. The electric work vehicle according to claim 1,
wherein, in a case where a change amount in voltage of the battery from a reference voltage or a magnitude of a change rate of voltage of the battery to the reference voltage is a first threshold or higher, the control section decreases the upper limit of rotational speed of the motor to a set first rotational speed limit.

3. The electric work vehicle according to claim 1,
wherein, each time a change in voltage of the battery occurs, the control section adjusts the upper limit of rotational speed of the motor according to a change amount from a reference voltage or a magnitude of a change rate to the reference voltage.

4. The electric work vehicle according to claim 1,
wherein the battery condition includes a remaining charge amount of the battery, and
wherein, each time a change in voltage of the battery occurs, the control section adjusts the upper limit of rotational speed of the motor according to a change amount from a reference voltage or a change rate to the reference voltage, and the remaining charge amount.

5. The electric work vehicle according to any one of claims 1 to 4, further comprising
a battery monitoring device to monitor the battery condition,
wherein the control section decreases an upper limit of target rotational speed of the motor so as to decrease an upper limit of actual rotational speed, based on a detected result with regard to the battery condition from the battery monitoring device.

6. The electric work vehicle according to any one of claims 1 to 5,
wherein the at least one motor is a travel motor which drives the at least one travelling device and a work motor which drives the at least one working device.

7. An electric work vehicle comprising:
at least one motor to drive one or both of a travelling device and a working device included in a vehicle;
an operation section to direct torque or actuation of the motor;
a control section to control the motor according to an operation of the operation section; and
a battery to supply power to the motor,
wherein the control section decreases an upper limit of torque of the motor, based on a detected result with regard to a battery condition including a voltage of the battery.

8. An electric work vehicle comprising:
a travel motor to drive at least one travelling device;
a work motor to drive at least one working device;
a battery to supply power to the travel motor and the work motor, the battery having a specified maximum discharge current; and
a control section to control the travel motor and the work motor,
wherein the control section controls a rotational speed of the travel motor so that a discharge current of the battery does not exceed the maximum discharge current during driving of the work motor.

9. The electric work vehicle according to claim 8 further comprising
a battery monitoring device to monitor a condition of the battery,
wherein the control section obtains the maximum discharge current from the battery monitoring device via a communication unit.

10. The electric work vehicle according to claim 8,
wherein the travel motor is driven by a travel inverter,
wherein the work motor is driven by a work inverter, and
wherein the control section calculates the discharge current from a sum of a detected value of a discharge current from the battery to the travel inverter, which is obtained by the travel inverter, and a detected value of a discharge current from the battery to the work inverter, which is obtained by the work inverter.

11. The electric work vehicle according to claim 8, further comprising
a battery monitoring device to monitor a condition of the battery,
wherein the control section obtains the discharge current from the battery monitoring device via a communication unit.

12. The electric work vehicle according to claim 8, further comprising
a sensor to measure the discharge current of the battery,
wherein the control section obtains the discharge current from the sensor via a communication unit.

13. The electric work vehicle according to any one of claims 1, 7, and 8,
wherein, regarding the battery, a plurality of battery packs are removably connected to a plurality of pack connection sections, so that the plurality of battery packs can be electrically connected in parallel, and
wherein forward directional converters that can flow current only in a direction of an output from the corresponding battery packs are connected to the plurality of pack connection sections, respectively.

14. The electric work vehicle according to any one of claims 1, 7, and 8,
wherein, regarding the battery, a plurality of battery packs are removably connected to a plurality of pack connection sections, so that the plurality of battery packs can be electrically connected in parallel, and
wherein bidirectional converters that can flow current in both of a direction of an output from the corresponding battery packs and a direction of an input to the corresponding battery packs by switching therebetween are connected to the plurality of pack connection sections, respectively.

15. The electric work vehicle according to claim 14 further comprising
a voltage sensor to detect voltages of the plurality of battery packs, respectively,
wherein, based on a detected value of the voltage sensor, whether or not voltages of two or more of the plurality of battery packs match is determined.

16. The electric work vehicle according to claim 14 including
a current sensor to detect current values that are output from the plurality of battery packs, respectively,
wherein, based on a detected value of the current sensor, whether or not voltages of two or more of the plurality of battery packs match is determined.

17. The electric work vehicle according to claim 15 or 16,
wherein, in a case where voltages of two of the battery packs match, the bidirectional converters corresponding to the battery packs whose voltages match are switched to bidirectionally conductive.
